**Europäisches Patentamt**

**European Patent Office**

**Office européen des brevets**

(19)

(11) Veröffentlichungsnummer : **0 488 942 A2**

(12) **EUROPÄISCHE PATENTANMELDUNG**

(21) Anmeldenummer : **91810803.6**

(22) Anmeldetag : **18.10.91**

(51) Int. Cl.$^5$ : **G05D 23/12**

(30) Priorität : **30.11.90 CH 3794/90**

(43) Veröffentlichungstag der Anmeldung :
**03.06.92 Patentblatt 92/23**

(84) Benannte Vertragsstaaten :
**AT BE CH DE DK ES FR GB GR IT LI LU NL SE**

(71) Anmelder : **AIRMOTEC AG**
**Analytische Geräte, Länggstrasse 19**
**CH-8308 Illnau (CH)**

(72) Erfinder : **Behm, Felix, Dr.**
**Schulhausstrasse 12**
**CH-8600 Dübendorf (CH)**
Erfinder : **Streit, Peter**
**Seewadelstrasse 3**
**CH-8335 Hittnau (CH)**

(74) Vertreter : **Frauenknecht, Alois J. et al**
**c/o PPS Polyvalent Patent Service AG,**
**Mellingerstrasse 1**
**CH-5400 Baden (CH)**

(54) **Vorrichtung und Verfahren zur Thermostatisierung von Objekten, insbesondere von Kolonnen in Analysegeräten sowie deren Verwendung.**

(57) Die Thermostatisierung von Leitungen erfordert einen grossen baulichen und energetischen Aufwand ; oft lassen sich Temperaturgradienten in den Grenzbereichen der Nutzräume nicht vermeiden. Durch einen Ofen, der als torusförmiges und geregeltes Wärmerohr (1) ausgebildet und dessen Ofennutzraum (4) in zwei Dimensionen vollständig und in der dritten Dimension zumindest partiell geschlossen ist, wird eine gleichmässige Temperaturverteilung im Nutzraum (4) gewährleistet. Diese Thermostatisierungsvorrichtung erfordert einen geringen konstruktiven Aufwand und benötigt ein Minimum an Energie zu deren Betrieb. Sie ermöglicht durch eine Kombination von Heiz- und Kühlmodus den Einsatz in einem weiten Temperaturbereich. Bevorzugte Verfahren zum Betrieb der Vorrichtung betreffen den Einbezug des Wärmerohrs (1) in einem geschlossenen Regelkreis sowie eine gezielte Kühlung zur Leistungssteigerung. Verwendung findet die Vorrichtung vornehmlich in Analysegeräten, insbesondere zur Thermostatisierung von Trennkolonnen in Gaschromatographiegeräten.

FIG.1

EP 0 488 942 A2

Die vorliegende Erfindung bezieht sich auf eine Vorrichtung zur Thermostatisierung von durch einen Ofenraum geführten Leitungen, Kolonnen und/oder Kapillaren. Ferner ist ein Verfahren und eine bevorzugte Verwendung beansprucht.

Bei vielen technischen Prozessen wird die Aufgabe gestellt, einen bestimmten räumlich vorgegebenen Bereich auf konstanter Temperatur zu halten. Die Aufgabenstellung ist vor allem in der Analytik von grosser Bedeutung, beispielsweise in der Gaschromatographie, wo lange Trennsäulen während einer zeitlich ausgedehnten Prozessphase auf einer konstanten Temperatur gehalten werden müssen. Es ist bis heute üblich, diese sogenannten Kolonnen in einem Luftstrom zu thermostatisieren, was zu einem bedeutenden baulichen und energetischen Aufwand führt, sehr hohe Anforderungen an die Stabilität der Regelung stellt und dennoch vielfach nicht gewährleisten kann, dass die Trennkolonne in ihrer gesamten Länge, vor allem in den Anlaufbereichen, gradientenfrei auf einer konstanten Temperatur gehalten wird.

Es ist aus der Verfahrenstechnik bekannt, zur Vergleichmässigung der Temperatur in zu thermostatisierenden Räumen, zur Erhöhung der Temperaturstabilität, der Temperaturreproduzierbarkeit sowie zum isothermen Wärmen und Abkühlen von thermostatisierten Nutzräumen das Wärmerohr-Prinzip anzuwenden. Durch die physikalisch bedingte Temperaturgleichheit von Flüssigphase und Dampfphase in einem Raum konstanten Dampfdruckes ergibt sich eine stark verbesserte Temperaturkonstanz. In verfahrenstechnischen Labors sind Wärmerohre im Einsatz, welche aus einem aus zwei konzentrischen Rohren gebildeten Ringraum aufgebaut sind und in dessen Zentrum sich ein Nutzraum für die Thermostatisierung von Objekten befindet. Dieser Lösung haftet der Nachteil an, dass aufgrund der zweidimensionalen Gestaltung des Wäremerohrs ein Temperaturgradient an beiden Rohrenden unvermeidbar ist.

Es ist daher Aufgabe der Erfindung, eine Vorrichtung zu schaffen, welche die Nachteile des Stands der Technik nicht aufweist und der Thermostatisierung von Leitungen, insbesondere den Einbezug in Geräte mit Leitungen erlaubt. Dabei sollen Lösungen gefunden werden, die es gestatten, die gesamte Thermostatisierungseinrichtung wesentlich kompakter als bisher zu bauen, die Temperatur im gesamten Nutzraum konstant zu halten, und mit geringem energetischen Aufwand rasch ändern zu können.

Diese Aufgabe wird dadurch gelöst, dass der Ofen als torusförmiges und geregeltes Wärmerohr ausgebildet ist und dass dieser den Ofennutzraum in zwei Dimensionen vollständig und in der dritten Dimension zumindest partiell umschliesst.

Der im Oberbegriff verwendete Ausdruck Leitung bezieht sich insbesondere auf Kapillaren, welche in der analytischen und präparativen physikalischen Chemie Verwendung finden, ebenso sind optische und elektrische Leitungen darunter zu verstehen.

Die Vorrichtung nach Anspruch 2 bewirkt eine grössere Oberfläche der Wandung des Wärmerohrofens und erzeugt damit einen bedeutend gesteigerten Wärmefluss.

Mit der in Anspruch 3 erwähnten Auskleidung oder Beschichtung wird nicht nur der vorgängig erwähnte Vorteil des Anspruchs 2 gesteigert, sondern es wird sogar möglich, durch eine allseitige Beschichtung das Wärmerohr revers zu betreiben, d.h. es kann wahlweise zur Heizung und Kühlung von Objekten eingesetzt werden. Es ist damit weitgehend eine Unabhängigkeit von der Umgebungstemperatur und von der Lage des Wärmerohres relativ zur Schwerkraftsrichtung gewährleistet.

Die Ausgestaltungen nach Anspruch 4 und 5 sind thermodynamisch vorteilhaft, da der Wärmeträger durch die Schwerkraft in vollen Kontakt mit der Heizfläche kommt.

Der alternative Einbezug einer Heizvorrichtung und einer Kühlvorrichtung gemäss Anspruch 6 gewährleistet einen sehr breiten Einsatzbereich.

Mit der Wahl des Arbeitsbereiches, Anspruch 7, zwischen 10° C und 200° C, ist ein grosser Anwendungsbereich insbesondere für die Gaschromatographie abgedeckt, wobei bevorzugt die an sich bekannten organischen Wärmeträger ihren Gefrierpunkt weit unterhalb 10° C und ihren kritischen Punkt oberhalb 200° C aufweisen und eine hohe Verdampfungsenthalphie besitzen.

Die Vorrichtung gemäss Anspruch 8 erlaubt eine Reduktion der zum Betrieb notwendigen Energie und verhindert ungewünschte Wärmeflüsse und damit störende Temperaturgradienten.

Stationär eingebaute Kolonnen, Anspruch 9, lassen sich in einfacher Weise durch den dreidimensional geschlossenen Ofenraum herausführen. Sofern die Kolonnen zum Zweck der präparativen Anwendung gewechselt werden müssen, bietet sich die axiale Durchführung als sehr vorteilhaft an.

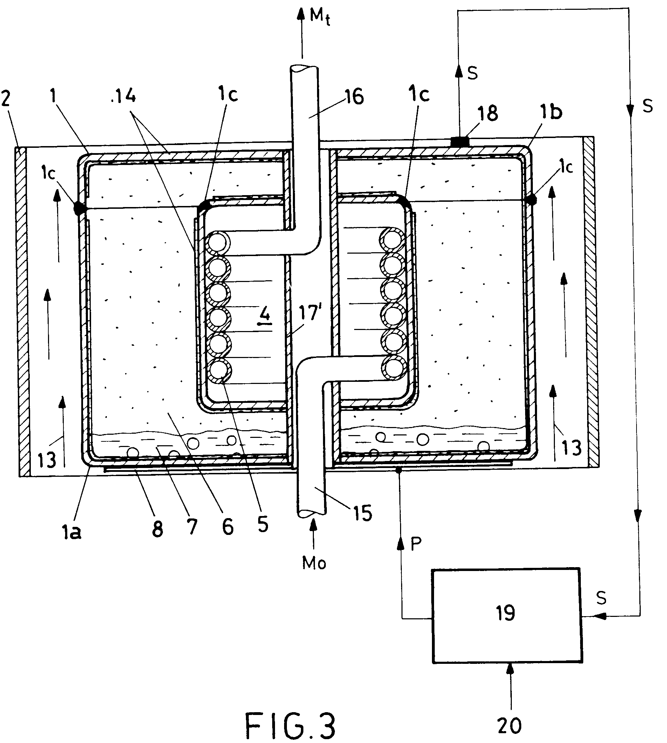

Die Ausgestaltung nach Anspruch 10 gemäss Fig. 3 zeichnet sich durch ihre konstruktive Einfachheit aus und erlaubt eine axiale Zu- und Abfuhr der zu thermostatisierenden Masse.

Ein ringförmiger Schlitz als Zugang zum Ofennutzraum gemäss Anspruch 11 gewährleistet ein besonders einfaches Wechseln der Kolonnen.

Eine Anordnung des Ofennutzraums als radial aussenliegende Fläche des torusförmig gestalteten Wärmerohrofens mit Abschluss durch einen peripher konzentrisch angeordneten Strahlungsreflektor ist in bestimmten Anwendungsfällen aus Gründen der Zugänglichkeit sehr vorteilhaft. Vgl. Anspruch 12. -Ebenfalls

2

lässt er sich gasdicht abschliessen und dadurch für die Dampfdruck/Temperaturmessung ausgestalten.

Eine Füllung des Ofennutzraums mit einem Medium hoher Leitfähigkeit gemäss Anspruch 13 beschleunigt die Wärmeübertragung auf die Kolonne und gleicht das Temperaturprofil innerhalb des Ofennutzraums aus. Geeignet erscheinen hierzu Paraffinöle und ähnliche.

Die Ausgestaltung nach Anspruch 14 dient der beschleunigten Temperaturänderung des Systems.

Durch eine Montage der Kolonne unter radialer mechanischer Vorspannung, gemäss Anspruch 15, wird der Wärmekontakt zur Oberfläche des Ofenraums hergestellt, sodass ein rascher Wärmeausgleich gewährleistet ist.

Die Verwendung des Dampfdruckes gemäss Anspruch 16 als Ersatzregelgrösse für die auf der Dampfdruckkurve physikalisch unmittelbar zugeordneten Temperatur erhöht die Genauigkeit und Stabilität des Systems.

Der Einsatz einer intensiven Kühlung der Aussenwände des Wärmerohrofens, entsprechend Anspruch 17, beschleunigt den Wärmefluss innerhalb des Wärmerohrofens und ermöglicht dadurch ein beschleunigtes Anfahren eines im Ablauf des physikalischen Vorgangs neu anzusteuernden Betriebszustandes.

Die Verwendung gemäss Anspruch 18 hat sich besonders bewährt, da einerseits das rasche Thermostatisierverhalten und anderseits der geringe Energie- und Raumbedarf, mit entsprechend kleinen Abstrahlungsverlusten, den Einbau in kompakte Gerätegruppen erlaubt und eine kontinuierliche oder quasi-kontinuierliche Probenaufbereitung ermöglicht.

Anhand von Zeichnungen werden nachfolgend Ausführungsbeispiele des Erfindungsgegenstandes beschrieben.

Es zeigt:

Fig. 1 eine erste Ausführungsform der Erfindung in Schnittdarstellung mit einer spiralförmigen Kolonne in einem dreidimensional geschlossenen Ofennutzraum und einer schematisch dargestellten Temperatur-Regelung,

Fig. 2 eine horizontale Schnittdarstellung einer Variante nach Fig. 1, mit einem zusätzlichen Innenrohr und seitlichen tangentialen Anschlüssen der Kolonne,

Fig. 3 eine weitere Variante der Anordnungen Fig. 1 mit einem zentralen als Strahlungsreflektor ausgebildeten Innenrohr, durch welches die Anschlüsse führen,

Fig. 4 eine mit einem ringförmigen Ofennutzraum und einem ringförmigen Zuführungsschlitz zum Einbringen der Kolonne ausgestaltete Vorrichtung mit integrierter Heizung und Kühlung in einer bodenseitigen Wärmetransportvorrichtung und

Fig. 5 eine vierte Variante mit einem peripheren Ofennutzraum und einem beispielsweisen Temperatur-Regelkreis.

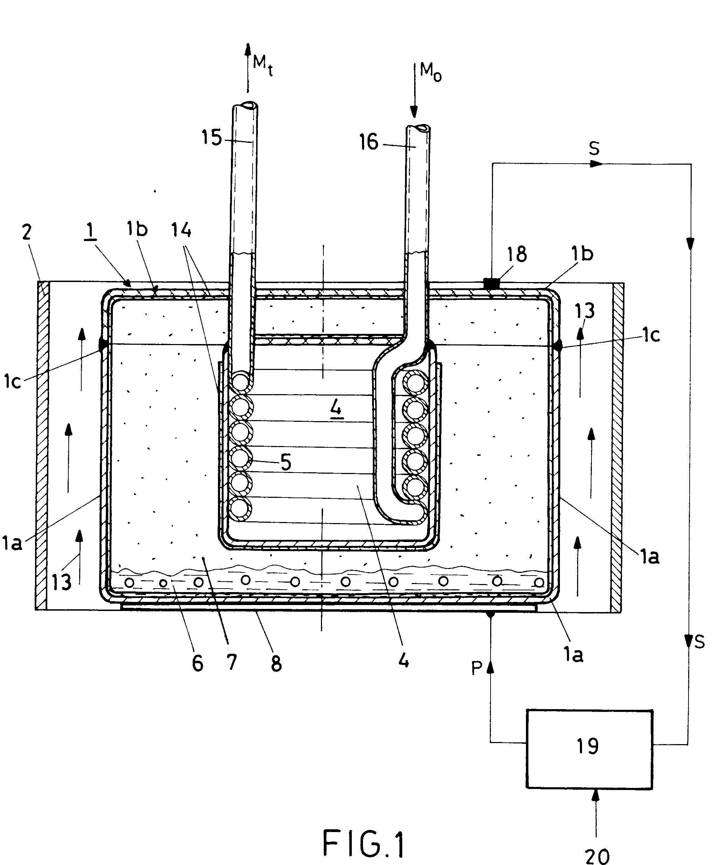

Gemäss Fig. 1 ist ein vereinfacht dargestellter Wärmerohrofen mit 1 bezeichnet; ersichtlich sind, ein Strahlungsreflektor 2, ein Ofennutzraum 4, die Flüssigphase 6 und die Dampfphase 7 eines Wärmeträgers, eine Wärmetransportvorrichtung 8, die Anschlüsse 15 und 16 einer Kapillarkolonne 5 mit der zu thermostatisierenden Masse $M_o$ und der beheizten Masse $M_t$. Im weiteren ist ein Kühlluftstrom 13, die Hauptkomponenten einer Regelung 19 mit Istwertgeber 18 und mit einer Sollwertvorgabe 20 gezeichnet. Ebenso ist eine oberflächenaktive Beschichtung d.h. eine Auskleidung 14 mittels eines handelsüblichen Glasvlieses, eines Stahlvlieses- oder Gewebes dargestellt.

Die Kolonne 5 wird von oben her in das untere Teil 1a des Ofens 1 eingesetzt; schrittweise zusammengebaut, in den Innenraum ein flüssiger Wärmeträger 6 eingefüllt und in an sich bekannter Weise mit dem oberen Teil 1b durch Schweissnähte 1c druckfest verschlossen.

Als Wärmeträger dient Methylalkohol; der Wärmerohrofen ist aus nichtrostendem Stahl (V2A) gefertigt und weist Wandungen von 1,2 mm mittlerer Dicke auf.

In weiteren Zeichnungen sind gleiche Funktionsteile mit gleichen Bezugsziffern bezeichnet.

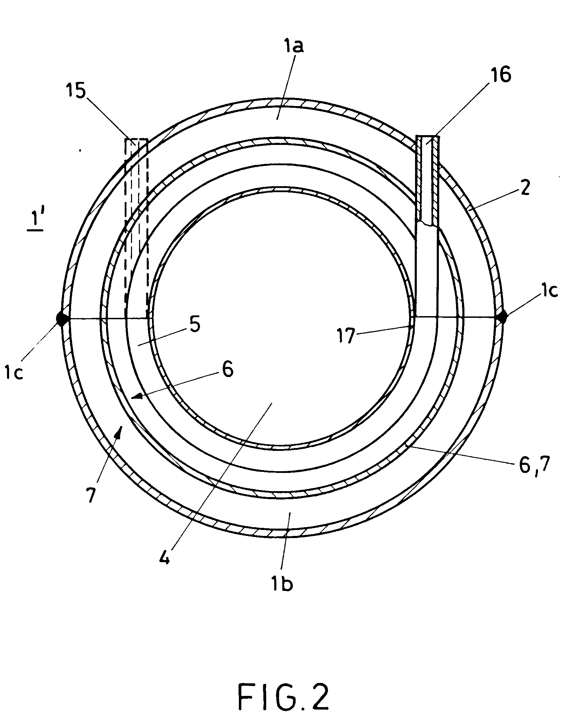

In Fig. 2 ist eine konzentrisch angeordnete und an ein Innenrohr 17 anliegende Kolonne 5 ersichtlich. Die Flüssig- und Gasphasen 6 bzw. 7 bilden sich hier konzentrisch aus. Die Anschlüsse 15 und 16 der Trennkolonne 5 sind tangential aus dem Wärmerohr 1' herausgeführt. Die Trennstelle zwischen den beiden Teilen 1a und 1b ist hier vertikal ausgebildet; die Teile sind ebenfalls durch Schweissnähte 1c miteinander verbunden. - Aus Darstellungsgründen ist die bodenseitig angeordnete Heizvorrichtung nicht eingezeichnet.

In der Variante, Fig. 3, ist das Innenrohr 17' als Strahlungsreflektor ausgestaltet. Analog zu Fig. 1 umschliesst der konzentrisch angeordnete Strahlungsreflektor 2 mit der Luftführung 13 den Wärmerohrofen 1.

Der Ofennutzraum 4 ist durch das zentral angeordnete Rohr 17' ausgespart, das die Eintritts- und Austrittsleitungen 15 bzw. 16 der Kolonne 5 enthält. Um die Temperaturkonstanz im Nutzraum 4 möglichst wenig zu stören, sind diese Durchtrittsbereiche klein gehalten.

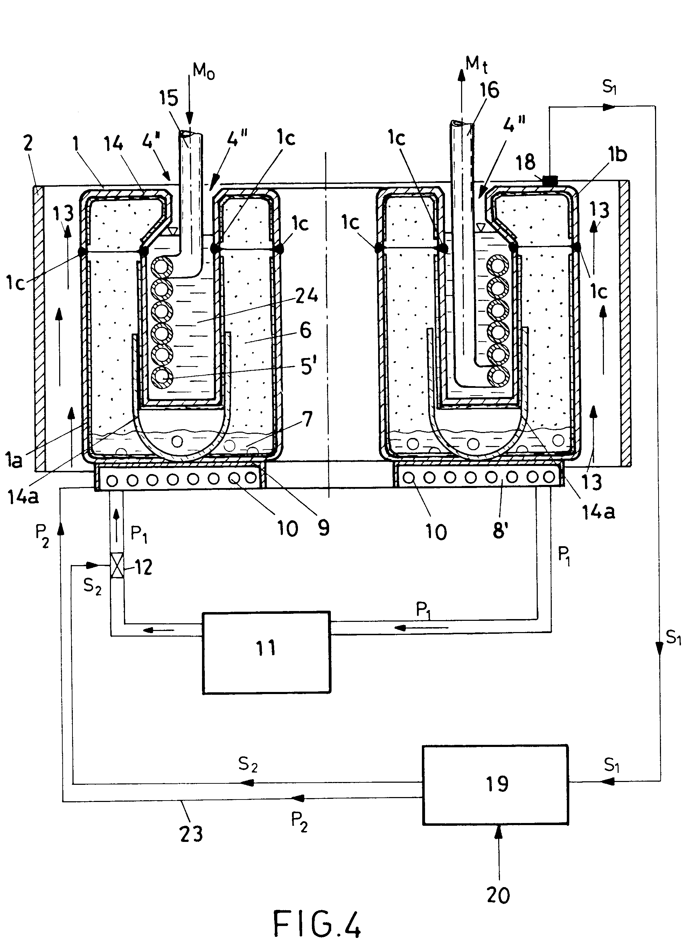

Aus Fig. 4 zu ersehen ist ein ringförmiger Nutzraum 4″ mit seinem ebenfalls ringförmigen Beschickungs-Schlitz, welcher ein einfaches Austauschen der Kolonne 5' erlaubt, was insbesondere für die präparative Analytik von Vorteil ist. Ferner ist im Nutzraum 4″ zusätzlich ein flüssiger Wärmeträger 24 eingezeichnet; eine Verbesserung des Wärmeüberganges von den Wänden zum Objekt wird durch diesen, eine hohe Leitfähigkeit aufweisenden Wärmeträger 24, erzielt.

Die Wärmetransportvorrichtung 8′ besitzt eine elektrische Widerstandsheizung 9 sowie eine darunterliegende Kühlschlange 10, die mit einer Kältemaschine 11 über ein der Regelung dienendes gesteuertes Ventil 12 verbunden ist. - Der Kühlkreislauf ist mit $P_1$ bezeichnet; das vom Temperatur-Istwertgeber 18, einem Thermoelement, abgenommene Signal $S_1$ wird in einem Regler 19 mit Sollwertvorgabe 20 umgesetzt. Die Ausgänge des Reglers 19 steuern einerseits die Heizleistung $P_2$ über einen nicht näher dargestellten Leistungsschalter 23 und andererseits das Stellsignal $S_2$ für das Servo-Ventil 12.

Diese kombinierte Heizvorrichtung 9/Kühlvorrichtung 10 an der Unterseite des Wärmerohrofens 1 erlaubt eine Rückkühlung des Mediums in einer Kältemaschine 11 und ermöglicht damit einen weitgehend universellen Einsatz der Vorrichtung. - Die Funktionssicherheit des Systems ist durch eine stets in die Flüssigphase 6 eintauchende kapillaraktive Auskleidung 14a gewährleistet.

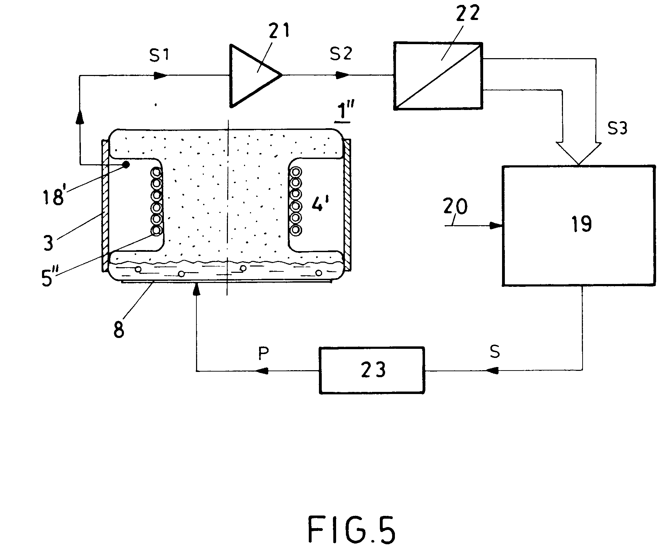

Die vereinfachte Darstellung, Fig. 5, zeigt als weitere Variante eine aussenliegende Kapillare 5″ mit einem gasdicht am Wärmerohrofen 1″ anliegenden Strahlungsreflektor 3 sowie zusätzlichen Komponenten eines Regelkreises: Den Signalverstärker 21, den Wandler 22 und den Leistungsschalter 23, der je nach dem Regelmodus den Strom für die Widerstandsheizung oder den Kühlmittelstrom in an sich bekannter Weise ansteuert.

Die Kolonne 5″ lässt sich im ringförmig ausgebildeten Aussenraum durch eine axiale Verschiebung des anliegenden Strahlungsreflektors 3 in einfacher Weise inspizieren und/oder warten.

Fig. 5 zeigt gleichzeitig die an sich bekannten Hauptkomponenten des geschlossenen Regelkreises mit seinem Signalverstärker 21, dem für die digitale Datenverarbeitung erforderlichen Wandler 22, dem eigentlichen Regler 19, der hier als PID-Regler ausgeführt ist, seinen Sollwert 20 von einer zentralen Steuerung erhält und den Leistungsschalter 23 über ein Puls-Weite-Signal ansteuert.

Anstelle der Temperatur wird hier der zu dieser korrelierende Dampfdruck gemessen durch einen Dampfdruck-Istwertgeber 18′ innerhalb des Ofennutzraumes 4′. Alternativ könnte auch der Dampfdruck im Innern des Wärmerohres 1″ gemessen werden, was aber zusätzliche Dichtprobleme ergeben würde.

Sämtliche Wärmerohrofen sind auf einen Prüfdruck von 60 bar ausgelegt, sodass eine hohe Betriebssicherheit gewährleistet ist.

Die Funktionsweise des Erfindungsgegenstandes wird zunächst anhand von Fig. 1 näher betrachtet:

Durch die Zuführung von Wärme am Boden des Wärmerohrofens 1 wird über der Flüssigphase des Wärmeträgers Dampf erzeugt, der an den freien Wänden des Ofens 1 sowohl an den Aussenwänden als auch an den den Nutzraum begrenzenden Innenwänden kondensiert und seine Kondensationswärme dort abgibt und sich verflüssigt. Durch die Schwerkraft bedingt kehrt der Wärmeträger, nach Art eines Thermosyphons, wieder zur Flüssigphase zurück. Da die flüssige Phase und Dampfphase des im Wärmerohr 1 anwesenden Zweiphasengemisches gemäss ihrer Zuordnung auf der Dampfdruckkurve exakt gleiche Temperaturen aufweisen, ist mit diesem Prinzip eine sonst unerreichbare Vergleichmässigung der Temperatur in nahezu beliebig geformten Räumen gewährleistet. - Um nun in möglichst kurzer Zeit einen bestimmten Betriebspunkt zu erreichen, muss der Wärmefluss möglichst gross sein. Neben der Wahl eines Wärmeträgers mit hoher Verdampfungsenthalphie ist dazu eine hohe Verdampfungs- und Kondensationsrate erforderlich. Eine Kühlung der Aussenwände mittels des Luftstromes 13 beschleunigt diesen Vorgang. Ist die gewünschte Temperatur einmal erreicht, so müssen nur noch die Wärmeverluste durch die Regelung ausgeglichen werden. Die erforderliche Betriebsenergie wird minimal gehalten durch Wärmeisolationsmittel und Strahlungsreflektoren.

Die torusförmige Ausgestaltung des Wärmerohrofens gestattet, den Ofennutzraum dreidimensional zu umschliessen und gewährleistet in diesem gefangenen Raum eine absolut konstante Temperatur, was für die dort plazierten Objekte oder die durchgeführten Leitungen mit ihren zu thermostatisierenden Massen M von entscheidender Bedeutung ist.

Das als Wärmeträger gewählte Medium wird im Betriebsbereich weit oberhalb seines Gefrierpunktes eingesetzt, um einen ausreichenden Wärmefluss bereits bei der unteren Einsatztemperatur zu gewährleisten. Nach oben stellt die kritische Temperatur des Mediums eine physikalische Grenze dar. Stoffe, die dieses Kriterium in günstiger Weise erfüllen, sind beispielsweise Methanol, Ethanol, Isopropanol, Aceton und Methyl-Ethylketon.

Ein weiteres Mittel, den Stoffumsatz zu steigern, ist eine Erhöhung der Wandoberfläche durch Aufrauhen, Rillieren, Wellen oder dergleichen. Eine besondere Wirkung erzielt man durch Beschichtung oder Auskleidung der gesamten inneren Oberfläche mit einem kapillaraktiven Stoff, wie Glasvlies oder Stahlgewebe. Dadurch wird nicht nur die aktive Oberfläche wesentlich weiter gesteigert, sondern infolge der Saugkraft innerhalb der Kapillaren kann die Flüssigkeit gegen die Schwerkraft wandern. Es werden dadurch zwei Wirkungen erzielt:

– Der Wärmerohrofen ist damit unabhängig von seiner Betriebslage,

– er kann im Umkehrbetrieb eingesetzt werden, d.h. die Verdampfung erfolgt an den Wänden und die Kondensation an einer besonders gekühlten Oberfläche, wie beispielsweise im Ausführungsbeispiel am Boden.

Die Regelung auf eine konstante Temperatur erfolgt anstelle der Temperaturmessung in vorteilhafter Weise durch den gemessenen Dampfdruck am Istwertgeber 18. Dem Regler 19 kann dabei durch eine Bedienungsperson oder eine Kontrollautomatik ein Sollwert 20 vorgegeben werden.

In dieser konstruktiven Ausgestaltung ist das Thermostatisierungssystem räumlich ausserordentlich kompakt und kann mit sehr geringer Betriebsenergie gespeist werden.

Die stark wechselnden Anwendungen der Thermostatisierungsaufgaben bedingen konstruktive Änderungen, welche sich durch unterschiedliche Formen des Nutzraumes 4 bzw. 4′ und 4″ sowie durch eine unterschiedliche Ausgestaltung der Zu- und Ableitungen 15 bzw. 16 berücksichtigen lassen.

In manchen Anwendungen, beispielsweise in der präparativen Analytik oder physikalischen Technik, müssen die Objekte resp. die Kolonnenwendel häufig gewechselt werden. Es ist daher eine Form des Ofennutzraumes erforderlich, die einen raschen Einbau und Ausbau gewährleistet und keine radiale Vorspannung der Kolonne erfordert.

Der am Beispiel eines Wärmerohrofens für die Anwendung in Gaschromatographiegeräten dargestellte Erfindungsgegenstand ist in seinen Ausführungsformen auf das in den Zeichnungen Dargestellte selbstverständlich nicht beschränkt und auch nicht ausschliesslich für die Zwecke der Gaschromatographie anwendbar.

Der Erfindungsgegenstand weist ebenfalls grosse Vorteile bei Anwendungen in der Metallographie, der Kristallographie, der Elektronik sowie bei der Verwendung von supraleitenden Materialien auf. Weitere attraktive Anwendungen sind in der Biologie und der medizinischen Technik denkbar.


**Patentansprüche**

1. Vorrichtung zur Thermostatisierung von durch einen Ofenraum geführten Leitungen, Kolonnen und/oder Kapillaren, dadurch gekennzeichnet, dass der Ofen als torusförmiges und geregeltes Wärmerohr (1) ausgebildet ist und dass dieses den Ofennutzraum (4) in zwei Dimensionen vollständig und in der dritten Dimension zumindest partiell umschliesst.

2. Vorrichtung nach Anspruch 1, dadurch gekennzeichnet, dass die Innenwand des Wärmerohrofens (1) aufgerauht ist.

3. Vorrichtung nach Anspruch 1, dadurch gekennzeichnet, dass die Innenwand des Wärmerohrofens mit einem Material hoher Oberflächenspannung (14) beschichtet oder ausgekleidet ist.

4. Vorrichtung nach Anspruch 1, dadurch gekennzeichnet, dass die Wärmetransportvorrichtung (8) sich an der Unterseite des Ofens befindet.

5. Vorrichtung nach Anspruch 1, dadurch gekennzeichnet, dass die Wärmetransportvorrichtung (8) mit einer Heizvorrichtung (9) ausgestaltet ist.

6. Vorrichtung nach Anspruch 1, dadurch gekennzeichnet, dass die Wärmetransportvorrichtung (8) gleichzeitig eine Heizvorrichtung (9) und eine Kühlvorrichtung (10) enthält.

7. Vorrichtung nach Anspruch 1, dadurch gekennzeichnet, dass der Wärmeträger (6, 7) einen Arbeitsbereich von 10° C bis 200° C aufweist.

8. Vorrichtung nach Anspruch 1, dadurch gekennzeichnet, dass ein konzentrischer Strahlungsreflektor (2) vorgesehen ist, welcher in einem radialen Abstand zum Wärmerohrofen (1) angeordnet ist.

9. Vorrichtung nach Anspruch 1, dadurch gekennzeichnet, dass die Kolonne (5) in axialer oder tangentialer Richtung aus dem Ofenraum herausgeführt ist.

10. Vorrichtung nach Anspruch 1, dadurch gekennzeichnet, dass im Zentrum des Wärmerohrofens ein als Strahlungsreflektor ausgebildetes Innenrohr (17) vorgesehen ist, durch welches die Kolonne (5) geführt ist.

11. Vorrichtung nach Anspruch 1, dadurch gekennzeichnet, dass der Zugang zum konzentrisch ringförmig angeordneten Ofennutzraum als ringförmiger Schlitz (4″) ausgestaltet ist.

12. Vorrichtung nach Anspruch 1, dadurch gekennzeichnet, dass der Ofennutzraum (4′) peripher durch einen konzentrisch angeordneten Strahlungsreflektor (3) abgeschlossen ist.

13. Vorrichtung nach Anspruch 1, dadurch gekennzeichnet, dass der Ofennutzraum (4) mit einem flüssigen Wärmeträger (24) gefüllt ist.

14. Vorrichtung nach Anspruch 1, dadurch gekennzeichnet, dass im Ringraum zwischen dem Wärmerohrofen (1) und dem Strahlungsreflektor (2) eine Zwangskühlung mittels Luft (13) vorgesehen ist.

15. Vorrichtung nach Anspruch 1, dadurch gekennzeichnet, dass die zylindrisch gewundene Kolonne (5) mit einer radialen mechanischen Vorspannung in den Ofennutzraum (4) eingelegt ist.

16. Verfahren zum Betrieb der Vorrichtung nach Anspruch 1, dadurch gekennzeichnet, dass die Temperatur des Wärmerohrofens in einem geschlossenen Regelkreis durch eine laufende Messung des Dampfdrucks auf einen vorgegebenen Sollwert geregelt wird.

17. Verfahren zum Betrieb der Vorrichtung nach Anspruch 1, dadurch gekennzeichnet, dass zur Erzielung einer raschen Betriebsbereitschaft die Aussenwände des Wärmerohrofens intensiv gekühlt werden und dass durch den resultierenden hohen Wärmetransport die zeitlich auf die Kolonne übertragene Wärmemenge gesteigert wird.

18. Verwendung der Vorrichtung nach Anspruch 1 zur Thermostatisierung von Kolonnen in Analysegeräten, insbesondere kapillaren Trennkolonnen in Gaschromatographiegeräten.

FIG.1

FIG.2

FIG.3

FIG.4

FIG.5